(19) **Europäisches Patentamt / European Patent Office / Office européen des brevets**

(11) **EP 4 068 172 A1**

(12) **EUROPEAN PATENT APPLICATION**
published in accordance with Art. 153(4) EPC

(43) Date of publication:
**05.10.2022 Bulletin 2022/40**

(21) Application number: **19954658.1**

(22) Date of filing: **25.11.2019**

(51) International Patent Classification (IPC):
**G06Q 10/04** (2012.01)     **G06Q 50/06** (2012.01)
**G06F 30/18** (2020.01)     **G06F 113/16** (2020.01)

(52) Cooperative Patent Classification (CPC):
**G06Q 10/04;** G06F 30/18; G06F 2113/16;
G06Q 50/06; Y04S 10/50

(86) International application number:
**PCT/CN2019/120568**

(87) International publication number:
**WO 2021/102623 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Shanghai Electric Wind Power Group Co., Ltd.
Shanghai 200241 (CN)**
• **SEWPG European Innovation Center ApS
8000 Aarhus C (DK)**

(72) Inventors:
• **HOU, Peng
Shanghai 200233 (CN)**

• **ZHU, Jiangsheng
Shanghai 200233 (CN)**
• **JIN, Rongsen
Shanghai 200233 (CN)**
• **CHEN, Le
Shanghai 200233 (CN)**
• **MENG, Xiaogang
Shanghai 200233 (CN)**
• **MIAO, Jun
Shanghai 200233 (CN)**

(74) Representative: **Bandpay & Greuter
30, rue Notre-Dame des Victoires
75002 Paris (FR)**

(54) **PLANNING METHOD AND SYSTEM FOR CABLE PATH OF WIND POWER PLANT, MEDIUM, AND ELECTRONIC DEVICE**

(57) The present disclosure provides methods, systems, media and electronic devices for planning a cable path of a wind farm. The method includes: obtaining operating parameters of the wind farm; constructing a first function based on total unit costs of cables with different cross sectional areas, the operating parameters and a preset maximum quantity of cable-carried wind turbines; respectively calculating the total unit costs corresponding to the different cross sectional areas and taking a cross sectional area corresponding to a lowest total unit cost as a target cross sectional area; constructing a second function based on total cable costs of the wind farm, cable paths, the target cross sectional area, the preset maximum quantity of cable-carried wind turbines and the operating parameters; respectively calculating the total cable costs corresponding to different cable paths and taking the cable path corresponding to a lowest total cable cost as a target cable path. The technical solution of the present disclosure can decouple the cable type selection and the cable path optimization to reduce the calculation complexity and increase the solving efficiency.

Processed by Luminess, 75001 PARIS (FR)

EP 4 068 172 A1

Obtain operating parameters of the wind farm, where the operating parameters include one or more wind turbine parameters, one or more transformer substation parameters and one or more cable parameters ⌇S0

Construct a first function based on total unit costs of cables with different cross sectional areas, the operating parameters and a preset maximum quantity of cable-carried wind turbines ⌇S1

Calculate the total unit costs corresponding to different cross sectional areas respectively and take the cross sectional area corresponding to a lowest total unit cost as a target cross sectional area ⌇S2

Construct a second function based on total cable costs of the wind farm, cable paths, the target cross sectional area, the preset maximum quantity of cable-carried wind turbines and the operating parameters ⌇S3

Calculate the total cable costs corresponding to different cable paths respectively and take the cable path corresponding to a lowest total cable cost as a target cable path ⌇S4

FIG.1

**Description**

**TECHNICAL FIELD**

The present disclosure relates to a wind power field, and in particular to methods, systems, media and electronic devices for planning a cable path of a wind farm.

**BACKGROUND**

Wind energy is one of pollution-free energies and offshore wind power is an important field for developing renewable energies, an important force to promote wind power technologies and industrial upgrade and an important approach to promote adjustment of the energy structure. Offshore wind energy resources are abundant, speeding up construction of offshore wind power projects can effectively promote control and treatment of atmospheric haze and reduce consumption of resources such as coals.

During construction of a wind farm, in order to save the overall construction costs, it is required to perform reasonable planning for a cable path in the wind farm. In related arts, meta-heuristic method or mathematical planning method may be adopted to optimize the cable path, and cables may be arranged based on an optimization result.

However, when the meta-heuristic method is used for cable path optimization, the algorithm stability is poor and arriving at an optimal solution cannot be guaranteed. The meta-heuristic method for a cable path optimization may generate a result worse than manual design when optimizing the cable path of a large-scale wind farm, and cannot guarantee that generated cable connection structures have no cross-connection. The mathematical planning method can only solve a cable path optimization problem for a wind farm with a small number of wind turbines (about 40 wind turbines) in a reasonable time period, but cannot effectively solve the cable path optimization problem for a large-scale offshore wind farm.

**SUMMARY**

The present disclosure aims to overcome the defects in related arts that the calculation process is cumbersome, and long-time consuming and inability to obtain an optimal solution at the time of planning a cable path in a wind farm, and provides a method, a system, a medium and an electronic device for planning a cable path of a wind farm,.

The present disclosure solves the above technical problems based on the following technical solutions.

There is provided a method for planning a cable path of a wind farm, including:

obtaining operating parameters of the wind farm, where the operating parameters includes one or more wind turbine parameters, one or more substation parameters and one or more cable parameters;
constructing a first function based on total unit costs of cables with different cross sectional areas, the operating parameters and a preset maximum quantity of cable-carried wind turbines, where each total unit cost comprises a material cost per unit, a unit installation cost and a net present value of unit cost of cable power loss in a cable with a specific cross sectional area over a life span, the cables with different cross sectional areas have different wind turbine carrying quantities, a total unit cost is a first optimization target of the first function, and a cross sectional area is a first optimization variable of the first function;
respectively calculating the total unit costs corresponding to the different cross sectional areas, and taking a cross sectional area corresponding to the lowest total unit cost as a target cross sectional area;
constructing a second function based on total cable cost of the wind farm, cable paths, the target cross sectional area, the preset maximum quantity of cable-carried wind turbines and the operating parameters, where each total cable cost comprises a total material cost, a total installation cost and a net present value of total cost of cable power loss of the wind farm over a full life span, a total cable cost is a second optimization target of the second function, and a cable path is a second optimization variable of the second function; and
respectively calculating the total cable costs corresponding to different cable paths, and taking the cable path corresponding to the lowest total cable cost as a target cable path.

Optionally, before performing the step of constructing the second function based on the total cable costs of the wind farm, the cable paths, the target cross sectional area, the preset maximum quantity of cable-carried wind turbines and the operating parameters, the method further includes:
establishing a constraint condition for the second function, where the constraint condition includes a non-closed graph constraint, a substation incoming/outgoing cable constraint, a wind turbine incoming/outgoing cable constraint, a cable ampacity constraint and a tree interconnection structure constraint.

Optionally, the first function is:

$$C^{total}(s, I_k) = C_s^{trench} + C_s^{cable} + C_s^{loss}$$

$$I_k = \left(k \frac{P_{rated}}{\sqrt{3} U_{collection}}\right)^2$$

$$C_s^{loss} = 3 \sum_{t=1}^{NY} \frac{C^e \tau_{\Delta Pmax}}{(1+d_f)^t} (kI_{rated})^2 R_s$$

where $C^{total}(s, I_k)$ represents the total unit cost of a cable, s represents a cross section type serial number of the cable, $C^e$ represents a power price, $\tau_{\Delta Pmax}$ represents annual equivalent full load hours of the wind farm, $d_f$ represents a discount rate, $I_{rated}$ represents a rated current of the wind turbine, $Rs$ represents a unit resistance value when the cross section type of the cable is s, $t$ represents time, and $1 \leq t \leq NY$, NY represents a life span of the wind farm, $k$ represents the quantity of wind turbines carried by the cable, $I_k$ represents ampacity of the cable when the cable carries $k$ wind turbines which are in full power generation state, $P_{rated}$ represents a rated power of the wind turbine, $U_{collection}$ represents a voltage level of the cable, $C_s^{trench}$ represents the unit installation cost, $C_s^{cable}$ represents the material cost per unit, $C_s^{loss}$ represents the net present value of unit cost of cable power loss.

Optionally, the second function is:

$$\text{Cost}_{min} = \min\left[\sum_i \sum_j \sum_k \left(C_{i,j}^{trench} + C_{i,j,k}^{cable} + C_{i,j,k}^{loss}\right)\right]$$

$$C_{i,j,k}^{loss} = 3 \sum_{t=1}^{NY} \frac{C^e \tau_{\Delta P\max}}{\left(1+d_f\right)^t} \left(kI_{rated}\right)^2 R_{i,j,s} L_{i,j,k}$$

$$C_{i,j}^{trench} = C^{unit,tr} L_{i,j,k}$$

$$C_{i,j,k}^{cable} = C^{unit,ca} L_{i,j,k}$$

where i and j represent serial numbers of the wind turbines, $Cost_{min}$ represents a resulted total cable cost of the wind farm, $C_{i,j,k}^{trench}$ represents a total installation cost of a cable between a wind turbine i and a wind turbine j when k wind turbines are carried, $C_{i,j,k}^{cable}$ represents a total material cost of the cable between the wind turbine i and the wind turbine j when k wind turbines are carried, $C_{i,j,k}^{loss}$ represents a net present value of total cost of cable power loss in the cable between the wind turbine i and the wind turbine j over a full life span of the wind farm when k wind turbines are carried, $C^{unit,tr}$ represents a unit installation cost of a cable with the target cross sectional area, $C^{unit,ca}$ represents a material cost per unit of the cable with the target cross sectional area, $L_{i,j,k}$ represents a length of the cable between the wind turbine i and the wind turbine j when k wind turbines are carried; and when $i=j$, $L_{i,j,k} = 0$; and when $i \neq j$, the $L_{i,j,k} = B_{i,j,k} As_{i,j,k}$; where $As_{i,j,k}$ represents a distance adjacency matrix, and $B_{i,j,k}$ represents a cable path.

There is provided a system for planning a cable path of a wind farm, including:

a parameter obtaining module, configured to obtain operating parameters of the wind farm, where the operating parameters includes one or more wind turbine parameters, one or more substation parameters and one or more cable parameters;

a first function constructing module, configured to construct a first function based on total unit costs of cables with different cross sectional areas, the operating parameters and a preset maximum quantity of cable-carried wind turbines, where each total unit cost includes a material cost per unit, a unit installation cost and a net present value of unit cost of cable power loss in a cables with a specific cross sectional area over a life span, the cables with different cross sectional areas have different wind turbine carrying quantities; and a total unit cost is a first optimization target of the first function, and a cross sectional area is a first optimization variable of the first function;

a cable cross sectional area determining module, configured to respectively calculate the total unit costs corresponding to the different cross sectional areas, and take a cross sectional area corresponding to the lowest total unit cost as a target cross sectional area;

a second function constructing module, configured to construct a second function based on total cable costs of the wind farm, the cable paths, the target cross sectional area, the preset maximum quantity of cable-carried wind turbines and the operating parameters, where each total cable cost includes a total material cost, a total installation cost and a net present value of total cost of cable power loss of the wind farm over a full life span, a total cable cost is a second optimization target of the second function, and a cable path is a second optimization variable of the second function;

a cable path determining module, configured to respectively calculate the total cable costs corresponding to different cable paths, and take the cable path corresponding to the lowest total cable cost as a target cable path.

Optionally, the system further includes a constraint establishing module, configured to establish a constraint condition for the second function, where the constraint condition includes a non-closed graph constraint, a substation incoming/outgoing cable constraint, a wind turbine incoming/outgoing cable constraint, a cable ampacity constraint and a tree interconnection structure constraint.

Optionally, the first function is:

$$C^{total}(s, I_k) = C_s^{trench} + C_s^{cable} + C_s^{loss}$$

$$I_k = \left( k \frac{P_{rated}}{\sqrt{3} U_{collection}} \right)^2$$

$$C_s^{loss} = 3 \sum_{t=1}^{NY} \frac{C^e \tau_{\Delta Pmax}}{(1 + d_f)^t} (k I_{rated})^2 R_s$$

where $C^{total}(s, I_k)$ represents the total unit cost of a cable, s represents a cross section type serial number of the cable, $C^e$ represents a price, $\tau_{\Delta Pmax}$ represents annual equivalent full load hours of the wind farm, $d_f$ represents a discount rate, $I_{rated}$ represents a rated current of the wind turbine, $Rs$ represents a unit resistance value when the cross section type of the cable is $s$, $t$ represents time, and $1 \leq t \leq NY$, where $NY$ represents a life span of the wind farm, $k$ represents a quantity of wind turbines carried by the cable, $I_k$ represents ampacity of the cable when the cable carries $k$ wind turbines which are in full power generation state, $P_{rated}$ represents a rated power of the wind turbine, $U_{collection}$ represents a voltage level of the cable, $C_s^{trench}$ represents a unit installation cost, $C_s^{cable}$ represents a material cost per unit, and $C_s^{loss}$ represents a net present value of unit cost of cable power loss.

Optionally, the second function is:

$$\text{Cos}\, t_{\min} = \min \left[ \sum_i \sum_j \sum_k \left( C_{i,j}^{trench} + C_{i,j,k}^{cable} + C_{i,j,k}^{loss} \right) \right]$$

$$C_{i,j,k}^{loss} = 3\sum_{t=1}^{NY} \frac{C^e \tau_{\Delta P\max}}{\left(1+d_f\right)^t} \left(kI_{rated}\right)^2 R_{i,j,s} L_{i,j,k}$$

$$C_{i,j}^{trench} = C^{unit,tr} L_{i,j,k}$$

$$C_{i,j,k}^{cable} = C^{unit,ca} L_{i,j,k}$$

where i, *and j* represent serial numbers of the wind turbines, $Cost_{min}$ represents a resulted total cable cost of the wind farm, $C_{i,j,k}^{trench}$ represents a total installation cost of a cable between a wind turbine i and a wind turbine *j* when *k* wind turbines are carried, $C_{i,j,k}^{cable}$ represents a total material cost of the cable between the wind turbine i and the wind turbine *j* when *k* wind turbines are carried, $C_{i,j,k}^{loss}$ represents a net present value of total cost of cable power loss in the cable between the wind turbine i and the wind turbine *j* over a full life span of the wind farm when *k* wind turbines are carried, $C^{unit,tr}$ represents a unit installation cost of the cable with the target cross sectional area, $C^{unit,ca}$ represents a material cost per unit of the cable with the target cross sectional area, $L_{i,j,k}$ represents a length of the cable between the wind turbine i and the wind turbine *j* when *k* wind turbines are carried; and when *i=j*, $L_{i,j,k} = 0$; and when *i≠j*, the $L_{i,j,k} = B_{i,j,k} As_{i,j,k}$; where $As_{i,j,k}$ represents a distance adjacency matrix, and $B_{i,j,k}$ represents a cable path.

There is provided an electronic device, including a memory, a processor, and a computer program stored on the memory and executable by the processor, where when the processor executes the computer program, to perform the above method for planning a cable path of a wind farm.

There is provided a computer readable storage medium, storing a computer program, where when the computer program is executed by a processor, the processor is caused to perform the above methods for planning a cable path of a wind farm.

The present disclosure has the following beneficial effects: in the methods, systems, storage media and electronic devices for planning a cable path of a wind farm, by decoupling the cable type selection and the cable path optimization, an optimal cable path is further determined after a cable type is determined. In this case, the calculation complexity is reduced, the solution result is unique and stable, and the solving efficiency is effectively improved. For a large-scale wind farm, this method can alleviate a memory overflow problem in current algorithm while ensuring the optimal solution. Thus, the method is suitable for solving a cable path optimization problem of a wind farm with more than one hundred wind turbines, and has great practical engineering value and wide applicability.

## BRIEF DESCRIPTION OF THE DRAWINGS

FIG. 1 is a flowchart illustrating a method for planning a cable path of a wind farm according to embodiment 1 of the present disclosure.

FIG. 2 is a structural block diagram illustrating a system for planning a cable path of a wind farm according to embodiment 2 of the present disclosure.

FIG. 3 is a structural schematic diagram illustrating an electronic device of a method for planning a cable path of a wind farm according to embodiment 3 of the present disclosure.

## DETAILED DESCRIPTION OF THE EMBODIMENTS

The present disclosure is further described below by way of embodiments, but the present disclosure is not limited to the scope of the embodiments.

Embodiment 1

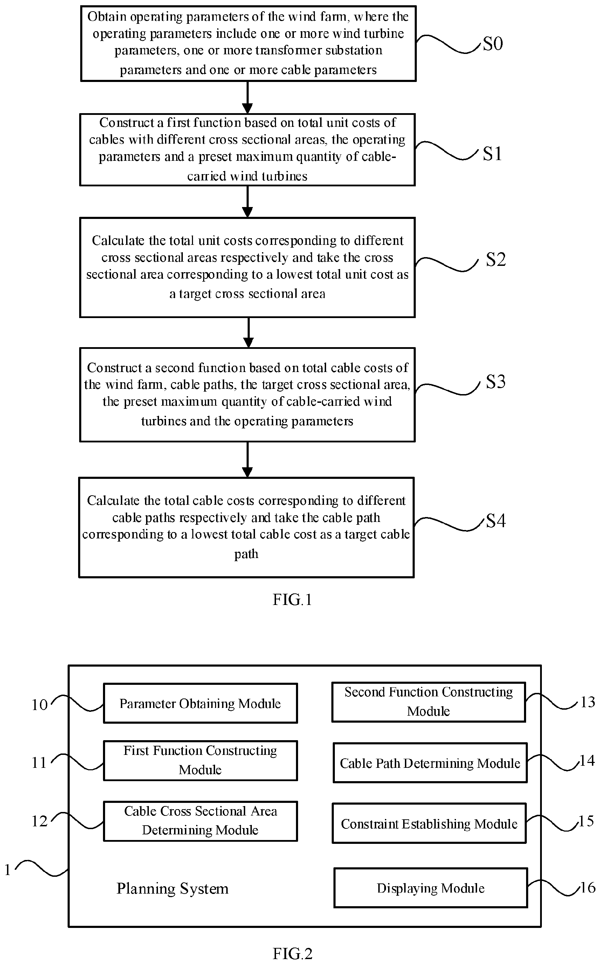

This embodiment provides a method for planning a cable path of a wind farm. As shown in FIG. 1, the method includes following steps.

At step S0, operating parameters of the wind farm are obtained, where the operating parameters include one or more wind turbine parameters, one or more substation parameters and one or more cable parameters.

In this embodiment, the wind farm may be an offshore wind farm or an onshore wind farm, which is not limited in this embodiment. Correspondingly, the method for planning a cable path may be used for cable path planning in various types of wind farms.

In a wind farm, power generated by wind turbines is to be gathered to a substation through cables, where the substation may be regarded as a starting generation point of an entire cable path.

After the operating parameters of the wind farm are obtained, variables involved in the subsequent first function and second function may be defined and initialized. For example, the optimization variables may initially include two parts: 5 selectable cable types, and 10 wind turbines and one substation, which can form an 11*11*5 three-dimensional optimization variable matrix, where the optimization variables are to be set to integer type.

At step S1, a first function is constructed based on total unit costs of cables with different cross sectional areas, the operating parameters and a preset maximum quantity of cable-carried wind turbines. Each total unit cost includes a material cost per unit, a unit installation cost and a net present value of unit cost of cable power loss in the cable with a specific cross sectional area over the life span. The cables with different cross sectional areas have different wind turbine carrying quantities. The total unit cost is a first optimization target of the first function, and the cross sectional area is a first optimization variable of the first function.

Specifically, the first function is shown below:

$$C^{total}(s, I_k) = C_s^{trench} + C_s^{cable} + C_s^{loss}$$

$$I_k = \left(k \frac{P_{rated}}{\sqrt{3} U_{collection}}\right)^2$$

$$C_s^{loss} = 3 \sum_{t=1}^{NY} \frac{C^e \tau_{\Delta Pmax}}{(1 + d_f)^t} (k I_{rated})^2 R_s$$

where $C^{total}(s, I_k)$ represents the total unit cost of a cable, s represents a cross section type serial number of the cable, $C^e$ represents a power price, $\tau_{\Delta Pmax}$ represents annual equivalent full load hours of the wind farm, $d_f$ represents a discount rate, $I_{rated}$ represents a rated current of the wind turbine, $Rs$ represents a unit resistance value when the cross section type of the cable is s, $t$ represents time, and $1 \leq t \leq NY$, NY represents a life span of the wind farm, $k$ represents the quantity of wind turbines carried by the cable, $I_k$ represents ampacity of the cable when the cable carries $k$ wind turbines which are in full power generation state, $P_{rated}$ represents a rated power of the wind turbine, $U_{collection}$ represents a voltage level of the cable, $C_s^{trench}$ represents the unit installation cost, $C_s^{cable}$ represents the material cost per unit, and $C_s^{loss}$ represents the net present value of unit cost of cable power loss.

Those skilled in the art may understand that, in this embodiment, the total unit cost of the cable may include but not limited to three factors: the material cost per unit of the cable, the unit installation cost of the cable and the net present value of unit cost of cable power loss. Considering these three factors are main components of the total unit cost of the cable, in this embodiment, the first function is constructed based on the material costs per unit of the cables, the unit installation costs of the cables and the net present values of unit cost of cable power loss, such that the calculation of the total unit cost is more specific. Calculations of the ampacity of the cable, when the cable carries $k$ wind turbines which are in the full power generation state, and the net present value of unit cost of cable power loss can refer to calculation logics of relevant physical variables in related arts.

At step S2, the total unit costs corresponding to different cross sectional areas are calculated respectively, and the cross sectional area corresponding to the lowest total unit cost is taken as a target cross sectional area.

In this step, different cable cross sectional areas correspond to different cable types, and the cable type that results in the lowest total unit cost is an optimal cable type. With the optimal cable type as a precondition and basis for subsequent cable path planning, decoupling calculation of the cable type optimization and the cable path optimization can be realized, e.g., the above 11*11*5 three-dimensional optimization variable matrix may be dimensionally reduced to a 11*11 two-dimensional optimization variable matrix.

At step S3, a second function is constructed based on total cable costs of the wind farm, cable paths, the target cross sectional area, the preset maximum quantity of cable-carried wind turbines and the operating parameters. Each total cable cost includes a total material cost, a total installation cost and a net present value of total cost of cable power loss of the wind farm over a full life span. The total cable cost is a second optimization target of the second function, and the cable path is a second optimization variable of the second function.

Specifically, the second function is shown below:

$$\text{Cost}_{\min} = \min\left[\sum_{i}\sum_{j}\sum_{k}\left(C_{i,j}^{trench} + C_{i,j,k}^{cable} + C_{i,j,k}^{loss}\right)\right]$$

$$C_{i,j,k}^{loss} = 3\sum_{t=1}^{NY}\frac{C^{e}\tau_{\Delta P\max}}{\left(1+d_{f}\right)^{t}}\left(kI_{rated}\right)^{2}R_{i,j,s}L_{i,j,k}$$

$$C_{i,j}^{trench} = C^{unit,tr}L_{i,j,k}$$

$$C_{i,j,k}^{cable} = C^{unit,ca}L_{i,j,k}$$

where i and $j$ represent serial numbers of the wind turbines, $Cost_{min}$ represents the resulted total cable cost of the wind farm, the $C_{i,j,k}^{trench}$ represents a total installation cost of a cable between a wind turbine i and a wind turbine $j$ when $k$ wind turbines are carried, $C_{i,j,k}^{cable}$ represents a total material cost of the cable between the wind turbine i and the wind turbine $j$ when $k$ wind turbines are carried, $C_{i,j,k}^{loss}$ represents a net present value of total cost of cable power loss in the cable between the wind turbine i and the wind turbine $j$ over the full life span of the wind farm when $k$ wind turbines are carried, $C^{unit,tr}$ represents a unit installation cost of a cable with the target cross sectional area, $C^{unit,ca}$ represents a material cost per unit of the cable with the target cross sectional area, $L_{i,j,k}$ represents a length of the cable between the wind turbine i and the wind turbine $j$ when $k$ wind turbines are carried; and if i=j, $L_{i,j,k}$ = 0; if i≠j, $L_{i,j,k}$ = $B_{i,j,k}As_{i,j,k}$, where $As_{i,j,k}$ represents a distance adjacency matrix, and $B_{i,j,k}$ represents a cable path.

Those skilled in the art may understand that, in this embodiment, the total cable cost of the wind farm may include but not limited to three factors: a total installation cost of the cable, a total material cost of the cable and a net present value of total cost of cable power loss. Considering these three factors are main components of the total cable cost of the wind farm, in this embodiment, the second function is constructed based on the total material costs of the cable, the total installation costs of the cable and the net present values of total cost of cable power loss, such that the calculation of the total cable cost of the wind farm may be more specific. The total material cost of the cable, the total installation cost of the cable and the net present value of total cost of cable power loss can be calculated by referring to calculation logics of relevant physical variables in related arts.

In this embodiment, the second function may use a mixed integer programming model. Before the mixed integer programming model is built, a constraint condition may be established for the second function, where the constraint condition may include a non-closed graph constraint, a substation incoming/outgoing cable constraint, a wind turbine incoming/outgoing cable constraint, a cable ampacity constraint and a tree interconnection structure constraint.

At step S4, the total cable costs corresponding to different cable paths are calculated respectively, and the cable path corresponding to the lowest total cable cost is taken as a target cable path.

In this embodiment, Gurobi (a large-scale mathematical planning optimization solver) in related arts may be used to solve the functions, and the Gurobi may finally output the optimal cable type, the target cable path and an overall cost.

In addition, an output result of Gurobi may also be displayed, so as to help the engineering designers to arrange the cables of the wind farm based on the calculated target cable path.

In the method for planning a cable path of a wind farm provided by this embodiment, by decoupling the cable type selection and the cable path optimization, an optimal cable path is further determined after a cable type is determined. In this case, the calculation complexity is reduced, the solution result is unique and stable, and the solving efficiency is effectively improved. For a large-scale wind farm, this method can alleviate a memory overflow problem in current algorithm while ensuring the optimal solution. Thus, the method is suitable for solving a cable path optimization problem of a wind farm with more than one hundred wind turbines, and has great practical engineering value and wide applicability.

Embodiment 2

This embodiment provides a planning system for planning a cable path of a wind farm. As shown in FIG. 2, the planning system 1 may include:

a parameter obtaining module 10, configured to obtain operating parameters of the wind farm, where the operating parameters include one or more wind turbine parameters, one or more substation parameters and one or more cable parameters;
a first function constructing module 11, configured to construct a first function based on total unit costs of cables with different cross sectional areas, the operating parameters and a preset maximum quantity of cable-carried wind turbines, Each total unit cost includes a material cost per unit, a unit installation cost and a net present value of unit cost of cable power loss in the cable with a specific cross sectional area over the life span. The cables with different cross sectional areas have different wind turbine carrying quantities. The total unit cost is a first optimization target of the first function, and the cross sectional area is a first optimization variable of the first function;
a cable cross sectional area determining module 12, configured to respectively calculate the total unit costs corresponding to different cross sectional areas, and take the cross sectional area corresponding to the lowest total unit cost as a target cross sectional area;
a second function constructing module 13, configured to construct a second function based on total cable costs of the wind farm, cable paths, the target cross sectional area, the preset maximum quantity of cable-carried wind turbines and the operating parameters. Each total cable cost includes a total material cost, a total installation cost and a net present value of total cost of cable power loss of the wind farm over a full life span. The total cable cost is a second optimization target of the second function, and the cable path is a second optimization variable of the second function;
a cable path determining module 14, configured to respectively calculate the total cable costs corresponding to different cable paths, and take the cable path corresponding to the lowest total cable cost as a target cable path.

In this embodiment, the wind farm may be an offshore wind farm or an onshore wind farm, which is not limited in this embodiment. Correspondingly, the system for planning a cable path may be used for cable path planning in various types of wind farms.
In a wind farm, power generated by wind turbines is to be gathered to a substation through cables, where the substation may be regarded as a starting generation point of an entire cable path.
After the operating parameters of the wind farm are obtained, variables involved in the subsequent first function and second function may be defined and initialized. For example, the optimization variables may initially include two parts: 5 selectable cable types, and 10 wind turbines and one substation, which can form an 11*11*5 three-dimensional optimization variable matrix, where the optimization variables are to be set to integer type.
Specifically, the first function is shown below:

$$C^{total}(s, I_k) = C_s^{trench} + C_s^{cable} + C_s^{loss}$$

$$I_k = \left(k \frac{P_{rated}}{\sqrt{3}U_{collection}}\right)^2$$

$$C_s^{loss} = 3 \sum_{t=1}^{NY} \frac{C^e \tau_{\Delta Pmax}}{(1 + d_f)^t} (kI_{rated})^2 R_s$$

where $C^{total}(s, I_k)$ represents the total unit cost of a cable, s represents a cross section type serial number of the cable, $C^e$ represents a power price, $\tau_{\Delta Pmax}$ represents annual equivalent full load hours of the wind farm, $d_f$ represents a discount rate, $I_{rated}$ represents a rated current of the wind turbine, $Rs$ represents a unit resistance value when the cross section type of the cable is s, *t* represents time, and 1≤*t*≤NY, NY represents a life span of the wind farm, *k* represents the quantity of wind turbines carried by the cable, $I_k$ represents ampacity of the cable when the cable carries *k* wind turbines which are in full power generation state, $P_{rated}$ represents a rated power of the wind turbine, $U_{collection}$ represents a voltage level of the cable, $C_s^{trench}$ represents the unit installation cost, $C_s^{cable}$ represents the material cost per unit, $C_s^{loss}$ represents the net present value of unit cost of cable power loss.

Those skilled in the art may understand that, in this embodiment, the total unit cost of the cable may include but not limited to three factors: the material cost per unit of the cable, the unit installation cost of the cable and the net present value of unit cost of cable power loss. Considering these three factors are main components of the total unit cost of the cable, in this embodiment, the first function is constructed based on the material cost per unit of the cable, the unit installation cost of the cable and the net present value of unit cost of cable power loss, such that the calculation of the total unit cost is more specific. Calculations of the ampacity of the cable, when the cable carries k wind turbines which are in the full power generation state, and the net present value of unit cost of cable power loss can refer to calculation logics of relevant physical variables in related arts.

Different cable cross sectional areas correspond to different cable types, and the cable type that results in the lowest total unit cost is an optimal cable type. With the optimal cable type as a precondition and basis for subsequent cable path planning, decoupling calculation of the cable type optimization and the cable path optimization can be realized, e.g., the above 11*11*5 three-dimensional optimization variable matrix may be dimensionally reduced to a 11*11 two-dimensional optimization variable matrix.

Specifically, the second function is shown below:

$$\text{Cos}\, t_{\min} = \min\left[ \sum_i \sum_j \sum_k \left( C_{i,j}^{trench} + C_{i,j,k}^{cable} + C_{i,j,k}^{loss} \right) \right]$$

$$C_{i,j,k}^{loss} = 3 \sum_{t=1}^{NY} \frac{C^e \tau_{\Delta P \max}}{\left(1 + d_f\right)^t} \left(k I_{rated}\right)^2 R_{i,j,s} L_{i,j,k}$$

$$C_{i,j}^{trench} = C^{unit,tr} L_{i,j,k}$$

$$C_{i,j,k}^{cable} = C^{unit,ca} L_{i,j,k}$$

where *i* and *j* represent serial numbers of the wind turbines, $Cost_{min}$ represents the resulted total cable cost of the wind farm, the $C_{i,j,k}^{trench}$ represents a total installation cost of a cable between a wind turbine *i* and a wind turbine *j* when *k* wind turbines are carried, the $C_{i,j,k}^{cable}$ represents a total material cost of the cable between the wind turbine *i* and the wind turbine j when *k* wind turbines are carried, $C_{i,j,k}^{loss}$ represents a net present value of total cost of cable power loss in the cable between the wind turbine *i* and the wind turbine *j* over the full life span of the wind farm when *k* wind turbines are carried, $C^{unit,tr}$ represents a unit installation cost of a cable with the target cross sectional area, $C^{unit,ca}$ represents a material cost per unit of the cable with the target cross sectional area, $L_{i,j,k}$ represents a length of the cable between the wind turbine *i* and the wind turbine *j* when *k* wind turbines are carried; and if *i=j*, $L_{i,j,k}$ = 0; if *i≠j*, $L_{i,j,k}$ = $B_{i,j,k} As_{i,j,k}$; where $As_{i,j,k}$ represents a distance adjacency matrix, and $B_{i,j,k}$ represents a cable path.

Those skilled in the art may understand that, in this embodiment, the total cable cost of the wind farm may include but not limited to three factors: a total installation cost of the cable, a total material cost of the cable and a net present value of total cost of cable power loss . Considering these three factors are main components of the total cable cost of the wind farm, in this embodiment, the second function is constructed based on the total material costs of the cable, the total installation costs of the cable and the net present values of total cost of cable power loss, such that the calculation of the total cable cost of the wind farm may be more specific. The total material cost of the cable, the total installation cost of the cable and the net present value of total cost of cable power loss can be calculated by referring to calculation logics of relevant physical variables in related arts.

In this embodiment, the planning system may also include a constraint establishing module 15. The second function may use a mixed integer programming model. Before the mixed integer programming model is built, the constraint establishing module 15 is configured to establish a constraint condition for the second function, where the constraint condition may include a non-closed graph constraint, a substation incoming/outgoing cable constraint, a wind turbine incoming/outgoing cable constraint, a cable ampacity constraint and a tree interconnection structure constraint.

Optionally, Gurobi (a large-scale mathematical planning optimization solver) in related arts may be used to solve the functions, and the Gurobi may finally output the optimal cable type, the target cable path and an overall cost.

In addition, the planning system in this embodiment may further include a displaying module 16. The displaying module 16 is configured to display the output result of Gurobi so as to help the engineering designers to arrange the cables of the wind farm based on the calculated target cable path.

When the system for planning a cable path of a wind farm provided by this embodiment is running, by decoupling the cable type selection and the cable path optimization, an optimal cable path is further determined after a cable type is determined. In this case, the calculation complexity is reduced, the solution result is unique and stable, and the solving efficiency is effectively improved. For a large-scale wind farm, this planning system can alleviate a memory overflow problem in current algorithm while ensuring the optimal solution. Thus, the planning system is suitable for solving a cable path optimization problem of a wind farm with more than one hundred wind turbines, and has great practical engineering value and wide applicability.

Embodiment 3

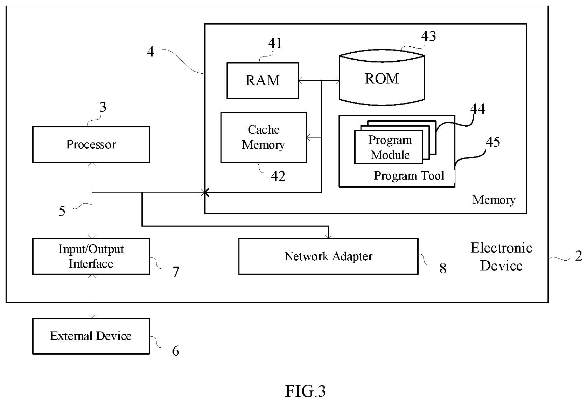

The present disclosure further provides an electronic device. As shown in FIG. 3, the electronic device may include a memory, a processor and a computer program stored on the memory that can be executed by the processor, where when the processor executes the computer program, the steps of the method for planning a cable path of a wind farm in the above embodiment 1 are performed.

It is understood that the electronic device shown in FIG. 3 is merely an example, and should not impose any limitation on the function and use scope of the embodiments of the present disclosure.

As shown in FIG. 3, the electronic device 2 may be in a form of a general computing device, for example, the electronic device 2 may be a server device. The components of the electronic device 2 may include but not limited to: at least one processor 3 above, at least one memory 4 above, and a bus 5 connecting different system components (including memory 4 and processor 3).

The bus 5 may include a data bus, an address bus and a control bus.

The memory 4 may include a volatile memory, for example, Random Access Memory (RAM) 41 and/or cache memory 42, and may further include a Read Only Memory (ROM) 43.

The memory 4 may further include a program tool 45 (or utility) having one group of program modules 44 (at least one). The program module 44 includes but not limited to: an operating system, one or more application programs, other program modules and program data. Each of these examples or a combination of these examples may include implementation of a network environment.

The processor 3 runs the computer program stored in the memory 4 to execute various functional applications and data processing, for example, perform the steps of the method for planning a cable path of a wind farm in the embodiment 1 of the present disclosure.

The electronic device 2 may also communicate with one or more external devices 6 (such as a keyboard, a pointing device and the like). Such communication may be performed via an input/output interface 7. In addition, the model-generated electronic device 2 may further communicate with one or more networks (such as local area network (LAN), Wide Area Network (WAN) and/or public network) via a network adapter 8.

As shown in FIG. 3, the network adapter 8 may communicate with other modules of the model-generated electronic device 2 via the bus 5. Those skilled in the art should understand, although not shown in drawings, other hardware and/or software modules may be used in combination with the model-generated electronic device 2, including but not limited to: microcode, device driver, redundant processor, external disk drive array, RAID (disk array) system, magnetic tape driver and data backup storage system and the like.

It is to be noted that, although several units/modules or sub-units/modules of the electronic device are mentioned in the above detailed descriptions, such division is just illustrative and not mandatory. Actually, according to the embodiments of the present disclosure, the features and functions of two or more units/modules as described above may be embodied in one unit/module. On contrary, the features and functions of one unit/module as described above may be further divided into a plurality of units/modules.

Embodiment 4

This embodiment provides a computer readable storage medium storing a computer program, where the program is executed by a processor to perform the steps of the method for planning a cable path of a wind farm in the embodiment 1.

The computer readable storage medium may specifically include but not limited to: portable disk, hard disk, random access memory, read only memory, erasable programmable read only memory, optical storage device, magnetic storage device and any combination of them above.

In an embodiment, the present disclosure may also be implemented in a form of a program product, which includes program codes, where, when the program product is run on a terminal, the program codes are used to cause the terminal to perform the steps of the method for planning a cable path of a wind farm in the embodiment 1.

The program codes for performing the present disclosure may be written by using any combination of one or more program design languages, and the program codes may be completely or partially executed on a user device or executed as an independent software package, or partially executed on the user device and partially executed on a remote device, or completely executed on the remote device.

Although the specific embodiments of the present disclosure are described above, those skilled in the art should understand that these embodiments are merely illustrative, and multiple changes or modifications may be made to these embodiments without departing from the principle and essence of the present disclosure. Therefore, the scope of protection of the present disclosure should be determined by the appended claims.

**Claims**

1. A method for planning a cable path of a wind farm, comprising:

    obtaining operating parameters of the wind farm, wherein the operating parameters comprises one or more wind turbine parameters, one or more substation parameters and one or more cable parameters;
    constructing a first function based on total unit costs of cables with different cross sectional areas, the operating parameters and a preset maximum quantity of cable-carried wind turbines, wherein
    each total unit cost comprises a material cost per unit, a unit installation cost and a net present value of unit cost of cable power loss in a cable with a specific cross sectional area over a life span,
    the cables with different cross sectional areas have different wind turbine carrying quantities,
    a total unit cost is a first optimization target of the first function, and
    a cross sectional area is a first optimization variable of the first function;
    calculating the total unit costs corresponding to the different cross sectional areas respectively, and taking a cross sectional area corresponding to the lowest total unit cost as a target cross sectional area;
    constructing a second function based on total cable costs of the wind farm, cable paths, the target cross sectional area, the preset maximum quantity of cable-carried wind turbines and the operating parameters, wherein
    each total cable cost comprises a total material cost, a total installation cost and a net present value of total cost of cable power loss of the wind farm over a full life span,
    a total cable cost is a second optimization target of the second function, and
    a cable path is a second optimization variable of the second function; and
    calculating the total cable costs corresponding to different cable paths respectively, and taking the cable path corresponding to the lowest total cable cost as a target cable path.

2. The method of claim 1, wherein before constructing the second function based on the total cable costs of the wind farm, the cable paths, the target cross sectional area, the preset maximum quantity of cable-carried wind turbines and the operating parameters, the method further comprises:
    establishing a constraint condition for the second function, wherein the constraint condition comprises a non-closed graph constraint, a substation incoming/outgoing cable constraint, a wind turbine incoming/outgoing cable constraint, a cable ampacity constraint and a tree interconnection structure constraint.

3. The method of claim 1 or 2, wherein the first function is:

$$C^{total}(s, I_k) = C_s^{trench} + C_s^{cable} + C_s^{loss}$$

$$I_k = \left( k \frac{P_{rated}}{\sqrt{3}U_{collection}} \right)^2$$

$$C_s^{loss} = 3 \sum_{t=1}^{NY} \frac{C^e \tau_{\Delta Pmax}}{(1+d_f)^t} (kI_{rated})^2 R_s$$

wherein $C^{total}$ $(s, I_k)$ represents the total unit cost of a cable,

s represents a cross section type serial number of the cable,
$C^e$ represents a price,
$\tau_{\Delta Pmax}$ represents annual equivalent full load hours of the wind farm,
$d_f$ represents a discount rate,
$I_{rated}$ represents a rated current of the wind turbine,
Rs represents a unit resistance value when the cross section type of the cable is s,
t represents time, and $1 \le t \le NY$, wherein NY represents a life span of the wind farm,
k represents a quantity of wind turbines carried by the cable,
$I_k$ represents ampacity of the cable when the cable carries k wind turbines which are in full power generation state,
$P_{rated}$ represents a rated power of the wind turbine,
$U_{collection}$ represents a voltage level of the cable,
$C_s^{trench}$ represents a unit installation cost,
$C_s^{cable}$ represents a material cost per unit, and
$C_s^{loss}$ represents a net present value of unit cost of cable power loss.

4. The method of claim 3, wherein the second function is:

$$\text{Cost}_{\min} = \min \left[ \sum_i \sum_j \sum_k \left( C_{i,j}^{trench} + C_{i,j,k}^{cable} + C_{i,j,k}^{loss} \right) \right]$$

$$C_{i,j,k}^{loss} = 3 \sum_{t=1}^{NY} \frac{C^e \tau_{\Delta P \max}}{\left(1+d_f\right)^t} \left(kI_{rated}\right)^2 R_{i,j,s} L_{i,j,k}$$

$$C_{i,j}^{trench} = C^{unit,tr} L_{i,j,k}$$

$$C_{i,j,k}^{cable} = C^{unit,ca} L_{i,j,k}$$

wherein $i$ and $j$ represent serial numbers of the wind turbines,

$Cost_{min}$ represents a resulted total cable cost of the wind farm,
$C_{i,j,k}^{trench}$ represents a total installation cost of a cable between a wind turbine $i$ and a wind turbine $j$ when $k$ wind turbines are carried,
$C_{i,j,k}^{cable}$ represents a total material cost of the cable between the wind turbine $i$ and the wind turbine $j$ when $k$ wind turbines are carried,
$C_{i,j,k}^{loss}$ represents a net present value of total cost of cable power loss in the cable between the wind turbine

*i* and the wind turbine *j* over a full life span of the wind farm when *k* wind turbines are carried,

$C^{unit,tr}$ represents a unit installation cost of a cable with the target cross sectional area,

$C^{unit,ca}$ represents a material cost per unit of the cable with the target cross sectional area,

$L_{i,j,k}$ represents a length of the cable between the wind turbine *i* and the wind turbine *j* when *k* wind turbines are carried, and

when *i=j*, $L_{i,j,k} = 0$ and when *i≠j*, the $L_{i,j,k} = B_{i,j,k}As_{i,j,k}$, wherein $As_{i,j,k}$ represents a distance adjacency matrix, and $B_{i,j,k}$ represents a cable path.

5. A system for planning a cable path of a wind farm, comprising:

a parameter obtaining module, configured to obtain operating parameters of the wind farm, wherein the operating parameters comprises one or more wind turbine parameters, one or more substation parameters and one or more cable parameters;

a first function constructing module, configured to construct a first function based on total unit costs of cables with different cross sectional areas, the operating parameters and a preset maximum quantity of cable-carried wind turbines, wherein

each total unit cost comprises a material cost per unit, a unit installation cost and a net present value of unit cost of cable power loss in a cables with a specific cross sectional area over a life span,

the cables with different cross sectional areas have different wind turbine carrying quantities,

a total unit cost is a first optimization target of the first function, and

a cross sectional area is a first optimization variable of the first function;

a cable cross sectional area determining module, configured to respectively calculate the total unit costs corresponding to the different cross sectional areas, and take a cross sectional area corresponding to the lowest total unit cost as a target cross sectional area;

a second function constructing module, configured to construct a second function based on total cable costs of the wind farm, cable paths, the target cross sectional area, the preset maximum quantity of cable-carried wind turbines and the operating parameters, wherein

each total cable cost comprises a total material cost, a total installation cost and a net present value of total cost of cable power loss of the wind farm over a full life span,

a total cable cost is a second optimization target of the second function, and

a cable path is a second optimization variable of the second function;

a cable path determining module, configured to respectively calculate the total cable costs corresponding to different cable paths, and take the cable path corresponding to the lowest total cable cost as a target cable path.

6. The system of claim 5, wherein the system further comprises a constraint establishing module, configured to establish a constraint condition for the second function, wherein the constraint condition comprises a non-closed graph constraint, a substation incoming/outgoing cable constraint, a wind turbine incoming/outgoing cable constraint, a cable ampacity constraint and a tree interconnection structure constraint.

7. The system of claim 5 or 6, wherein the first function is:

$$C^{total}(s, I_k) = C_s^{trench} + C_s^{cable} + C_s^{loss}$$

$$I_k = \left(k \frac{P_{rated}}{\sqrt{3}U_{collection}}\right)^2$$

$$C_s^{loss} = 3 \sum_{t=1}^{NY} \frac{C^e \tau_{\Delta Pmax}}{(1 + d_f)^t} (kI_{rated})^2 R_s$$

wherein $C^{total}$ $(s, I_k)$ represents the total unit cost of a cable,

s represents a cross section type serial number of the cable,
$C^e$ represents a price,
$\tau_{\Delta Pmax}$ represents annual equivalent full load hours of the wind farm,
$d_f$ represents a discount rate,
$I_{rated}$ represents a rated current of the wind turbine,
$Rs$ represents a unit resistance value when the cross section type of the cable is s,
t represents time, and $1 \leq t \leq NY$, wherein NY represents a life span of the wind farm,
k represents a quantity of wind turbines carried by the cable,
$I_k$ represents ampacity of the cable when the cable carries $k$ wind turbines which are in full power generation state,
$P_{rated}$ represents a rated power of the wind turbine,
$U_{collection}$ represents a voltage level of the cable,
$C_s^{trench}$ represents a unit installation cost,
$C_s^{cable}$ represents a material cost per unit, and
$C_s^{loss}$ represents a net present value of unit cost of cable power loss.

8. The system of claim 7, wherein the second function is:

$$\text{Cos} t_{\min} = \min\left[\sum_i \sum_j \sum_k \left(C_{i,j}^{trench} + C_{i,j,k}^{cable} + C_{i,j,k}^{loss}\right)\right]$$

$$C_{i,j,k}^{loss} = 3\sum_{t=1}^{NY} \frac{C^e \tau_{\Delta P\max}}{\left(1+d_f\right)^t} \left(kI_{rated}\right)^2 R_{i,j,s} L_{i,j,k}$$

$$C_{i,j}^{trench} = C^{unit,tr} L_{i,j,k}$$

$$C_{i,j,k}^{cable} = C^{unit,ca} L_{i,j,k}$$

wherein $i$ and $j$ represent serial numbers of the wind turbines,

$Cost_{min}$ represents a resulted total cable cost of the wind farm,
$C_{i,j,k}^{trench}$ represents a total installation cost of a cable between a wind turbine $i$ and a wind turbine $j$ when $k$ wind turbines are carried,
$C_{i,j,k}^{cable}$ represents a total material cost of the cable between the wind turbine $i$ and the wind turbine $j$ when $k$ wind turbines are carried,
$C_{i,j,k}^{loss}$ represents a net present value of total cost of cable power loss in the cable between the wind turbine $i$ and the wind turbine $j$ over a full life span of the wind farm when $k$ wind turbines are carried,
$C^{unit,tr}$ represents a unit installation cost of the cable with the target cross sectional area,
$C^{unit,ca}$ represents a material cost per unit of the cable with the target cross sectional area,
$L_{i,j,k}$ represents a length of the cable between the wind turbine $i$ and the wind turbine $j$ when $k$ wind turbines are carried; and
when $i=j$, $L_{i,j,k} = 0$; and when $i \neq j$, the $L_{i,j,k} = B_{i,j,k} As_{i,j,k}$; wherein $As_{i,j,k}$ represents a distance adjacency matrix, and $B_{i,j,k}$ represents a cable path.

9. An electronic device, comprising:

a memory;
a processor; and
a computer program stored on the memory and executable by the processor,
wherein when the processor executes the computer program, the method for planning a cable path of a wind farm according to any one of claims 1 to 4 is performed.

10. A computer readable storage medium, storing a computer program, wherein when the computer program is executed by a processor, the processor is caused to perform the method for planning a cable path of a wind farm according to any one of claims 1 to 4.

Obtain operating parameters of the wind farm, where the operating parameters include one or more wind turbine parameters, one or more transformer substation parameters and one or more cable parameters — S0

Construct a first function based on total unit costs of cables with different cross sectional areas, the operating parameters and a preset maximum quantity of cable-carried wind turbines — S1

Calculate the total unit costs corresponding to different cross sectional areas respectively and take the cross sectional area corresponding to a lowest total unit cost as a target cross sectional area — S2

Construct a second function based on total cable costs of the wind farm, cable paths, the target cross sectional area, the preset maximum quantity of cable-carried wind turbines and the operating parameters — S3

Calculate the total cable costs corresponding to different cable paths respectively and take the cable path corresponding to a lowest total cable cost as a target cable path — S4

FIG.1

| Parameter Obtaining Module — 10 | Second Function Constructing Module — 13 |
| First Function Constructing Module — 11 | Cable Path Determining Module — 14 |
| Cable Cross Sectional Area Determining Module — 12 | Constraint Establishing Module — 15 |
| Planning System — 1 | Displaying Module — 16 |

FIG.2

FIG.3

## INTERNATIONAL SEARCH REPORT

| International application No. |
| --- |
| **PCT/CN2019/120568** |

**A. CLASSIFICATION OF SUBJECT MATTER**

G06Q 10/04(2012.01)i; G06Q 50/06(2012.01)n; G06F 30/18(2020.01)n; G06F 113/16(2020.01)n

According to International Patent Classification (IPC) or to both national classification and IPC

**B. FIELDS SEARCHED**

Minimum documentation searched (classification system followed by classification symbols)

G06Q, G06F, H02J

Documentation searched other than minimum documentation to the extent that such documents are included in the fields searched

Electronic data base consulted during the international search (name of data base and, where practicable, search terms used)

CNPAT, WPI, EPODOC, CNKI: 风电, 电缆, 线路, 线缆, 路径, 规划, 成本, 截面积, 函数, 解耦, wind, farm, offshore, cable, line, path, route, plan, cost, cross area, function, decoupling

**C. DOCUMENTS CONSIDERED TO BE RELEVANT**

| Category* | Citation of document, with indication, where appropriate, of the relevant passages | Relevant to claim No. |
| --- | --- | --- |
| A | CN 107909222 A (BEIJING TIANRUN XINNENG INVESTMENT CO., LTD.) 13 April 2018 (2018-04-13)<br>description, paragraphs 0062-0070 | 1-10 |
| A | CN 107180303 A (STATE GRID SHANGHAI MUNICIPAL ELECTRIC POWER COMPANY) 19 September 2017 (2017-09-19)<br>entire document | 1-10 |
| A | CN 108108855 A (NANJING UNIVERSITY OF AERONAUTICS AND ASTRONAUTICS) 01 June 2018 (2018-06-01)<br>entire document | 1-10 |
| A | CN 106447081 A (JIANGSU POWER DESIGN INSTITUTE CO., LTD. OF CHINA ENERGY ENGINEERING GROUP) 22 February 2017 (2017-02-22)<br>entire document | 1-10 |
| A | CN 108460233 A (ECONOMIC RESEARCH INSTITUTE OF STATE GRID FUJIAN ELECTRIC POWER CO., LTD.; STATE GRID FUJIAN ELECTRIC POWER COMPANY) 28 August 2018 (2018-08-28)<br>entire document | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 July 2020** | **25 August 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2019/120568**

| C. | DOCUMENTS CONSIDERED TO BE RELEVANT | |
|---|---|---|
| Category* | Citation of document, with indication, where appropriate, of the relevant passages | Relevant to claim No. |
| A | CN 109242162 A (STATE NUCLEAR ELECTRIC POWER PLANNING DESIGN AND RESEARCH INSTITUTE CO., LTD.) 18 January 2019 (2019-01-18) <br> entire document | 1-10 |
| A | EP 0530808 A2 (HITACHI LTD.) 10 March 1993 (1993-03-10) <br> entire document | 1-10 |

Form PCT/ISA/210 (second sheet) (January 2015)

**INTERNATIONAL SEARCH REPORT**
Information on patent family members

International application No.

**PCT/CN2019/120568**

| Patent document cited in search report | | | Publication date (day/month/year) | Patent family member(s) | | | Publication date (day/month/year) |
|---|---|---|---|---|---|---|---|
| CN | 107909222 | A | 13 April 2018 | None | | | |
| CN | 107180303 | A | 19 September 2017 | None | | | |
| CN | 108108855 | A | 01 June 2018 | None | | | |
| CN | 106447081 | A | 22 February 2017 | None | | | |
| CN | 108460233 | A | 28 August 2018 | None | | | |
| CN | 109242162 | A | 18 January 2019 | None | | | |
| EP | 0530808 | A2 | 10 March 1993 | US | 5418405 | A | 23 May 1995 |
| | | | | CA | 2077421 | A1 | 04 March 1993 |
| | | | | JP | H0560921 | A | 12 March 1993 |

Form PCT/ISA/210 (patent family annex) (January 2015)